Europäisches Patentamt

European Patent Office

Office européen des brevets

(11) Veröffentlichungsnummer: **0 160 713**
**A1**

## (12) EUROPÄISCHE PATENTANMELDUNG

(21) Anmeldenummer: 84104980.2

(22) Anmeldetag: 04.05.84

(51) Int. Cl.⁴: **G 01 L 9/12**
G 01 L 23/12, F 02 M 65/00

(43) Veröffentlichungstag der Anmeldung:
13.11.85 Patentblatt 85/46

(84) Benannte Vertragsstaaten:
AT CH DE FR GB LI

(71) Anmelder: **Kistler Instrumente AG**
**Eulachstrasse 22**
**CH-8408 Winterthur(CH)**

(72) Erfinder: **Baumgartner, H. U., Dr.**
**Landenbergstrasse 45**
**CH-8404 Winterthur(CH)**

(74) Vertreter: **Schmidt, Horst, Dr. et al,**
**Patentanwälte Pohlmann & Schmidt Siegfriedstrasse 8**
**D-8000 München 40(DE)**

(54) Druckaufnehmer, insbesondere für die Überwachung von Kraftstoff-Einspritzsystemen.

(57) Druckaufnehmer, bestehend aus einer zylindrischen Messelektrode (4) im Zentrum und einer vom Gehäuse (1) unabhängigen Gegenelektrode (5) in Form einer Zylinderhülse die innen wie aussen vom Druckmedium umgeben ist. Es wird die Kapazitätsänderung gemessen, die sich durch Steigerung der Dielektrizitätskonstanten ergibt, wenn das Druckmedium zwischen den Elektroden unter Druck gesetzt wird. Der Aufnehmer eignet sich besonders zur Messung der Drücke in Kraftstoff-Einspritzystemen, da keine Membranen vorhanden sind, die ermüden können.

Fig. 1

EP 0 160 713 A1

Druckaufnehmer, insbesondere für die Überwachung von
Kraftstoff-Einspritzsystemen

---

Die Erfindung betrifft einen Druckaufnehmer, insbesondere
für die Überwachung von Kraftstoff-Einspritzsystemen.

Der Brennstoffverbrauch und die Menge des Russes in den
Abgasen des Auspuffes eines Dieselmotors sind in hohem
Masse von der Güte des Einspritzsystems abhängig. Die
Brennstoffpumpe ist derart gestaltet, dass die Förderung
schlagartig einsetzt, wenn sich der Kolben des Motors im
Bereich des oberen Totpunktes befindet, wobei die Einspritzphase im Vergleich zum ganzen Motorenzyklus sehr
kurz ist. Hierbei entstehen Druckwellen mit Druckspitzen
von 500 bis 2000 bar, die von der Pumpe bis zum Einspritzventil laufen, das durch den Druck geöffnet wird und
gleich wieder schliesst, wenn die Druckspitze vorbei ist.
Die Druckwelle läuft dann vom Einspritzventil wieder zurück
zu der Pumpe, wird dort reflektiert und läuft ein zweites
Mal zum Einspritzventil und ist manchmal stark genug, um
das Ventil ein zweites Mal zu öffnen. Diese Nacheinspritzung
kommt zu spät, erfolgt mit wenig Ueberdruck und die Zerstäubung ist schlecht, weshalb diese Brennstoff-Nachlieferung nur zur Rauchbildung beiträgt. Wenn die Verbrennung einmal zu russen beginnt, verkokt das Einspritzventil und schliesst nicht mehr richtig, wodurch noch mehr
Brennstoff in einem unrichtigen Zeitpunkt in den Verbrennungsraum gelangt, wodurch das Russen des Motors noch
verstärkt wird.

Seit langem pflegt man das richtige Funktionieren eines
Einspritzsystems mittels Hochdruckaufnehmer in der Brennstoffleitung zu kontrollieren. Heute begnügt man sich nicht mehr mit einer einmaligen Kontrolle bei der Montage des Motors, sondern möchte diese Kontrolle ständig während der ganzen Betriebsdauer des Motors haben.

Besonders bewährt haben sich piezoelektrische Quarz-Druckaufnehmer, die sich durch hohe Steifigkeit auszeichnen. Der Druck wirkt auf eine Membran, die durch ein Quarzpaket abgestützt ist. Die Kraftwirkung auf das Quarzpaket bewirkt, dass piezoelektrische Ladungen entstehen, die mit einem Elektrometerverstärker oder einem Ladungsverstärker gemessen werden können. Ladung und wirkende Kraft sind zueinander streng proportional, so dass durch eine einfache Multiplikation des Messwertes für die Ladung mit einem Proportionalitätsfaktor bzw. Kalibrationsfaktors der Druck berechnet werden kann. Die Membran deckt die Frontseite des Druckaufnehmers ab und ist mit dem Druckfühlergehäuse verbunden, andererseits stützt sie sich auf dem Quarzpaket ab. Zwischen Gehäuse und Quarzpaket befindet sich ein Spalt, der von der Membran überbrückt werden muss. In diesem Bereich wird die Membran auf Biegung beansprucht. Im Dieselmotoren-Überwachungsbetrieb, wenn der Hochdruckaufnehmer über Monate oder Jahre im Einsatz steht und viele Millionen Belastungswechsel sich summieren, bricht die Membran früher oder später, und es kommt zu einer Betriebsunterbrechung, da der Dieselkraftstoff beim gebrochenen Druckaufnehmer austreten kann.

Zur Vermeidung dieser mit Membran-Aufnehmern verbundenen Schwierigkeiten basiert der erfindungsgemässe Hochdruckaufnehmer gemäss Anspruch 1 auf einem kapazitiven Messprinzip, das erlaubt, auf eine Membran ganz zu verzichten. Das Druckmedium, d.h. in bevorzugtem Anwendungsgebiet der Dieselkraftstoff, steht mit zwei Elektroden in Berührung und füllt den Zwischenraum zwischen den Elektroden, die zusammen einen elektrischen Kondensator bilden. Das Druckmedium, das elektrisch gut isolierend sein muss, übernimmt die Funktion des Dielektrikums. Die Kapazität dieses Kondensators ist von der Dielektrizitätskonstante des Dielektrikums
abhängig, die ihrerseits auch wieder vom Druck abhängig
ist. Eine Drucksteigerung bewirkt eine Kapazitätssteigerung des Kondensators, ohne dass sich dessen geometrische Anordnung der Elektroden ändert. Die
Kapazität wird elektrisch gemessen, was eine Bestimmung
der Druckänderung erlaubt. Diesen Einfluss des Druckes
auf die Dielektrizitätskonstante eines Isolators wird
in der Fachliteratur als piezodielektrischer oder auch
als piezopermitiver Effekt bezeichnet.

Die Erfindung wird nachfolgend anhand von Ausführungsformen
und der Zeichnung näher erläutert.

Fig. 1    zeigt eine mögliche Ausführungsform eines
          Hochdruckaufnehmers zur Messung von Dieselkraftstoff-Einspritzdrucken.

Fig. 2    zeigt eine mögliche Auswerteelektronik mit
          einer Messbrücke.

Fig. 3    zeigt eine abgewandelte Form mit vielen
          Elektrodenplatten und hoher Kapazität für
          präzisere Messungen.

Fig. 4    zeigt den Längsschnitt durch eine andere
          abgewandelte Form eines Druckaufnehmers mit
          einer Zufuhröffnung und einem separaten
          Abfluss für den Dieselbrennstoff, der den
          ganzen Aufnehmer durchströmt.

Fig. 5    zeigt einen Querschnitt bei der Ebene S-S
          durch den Aufnehmer nach Fig. 4.

- 4 -

0160713

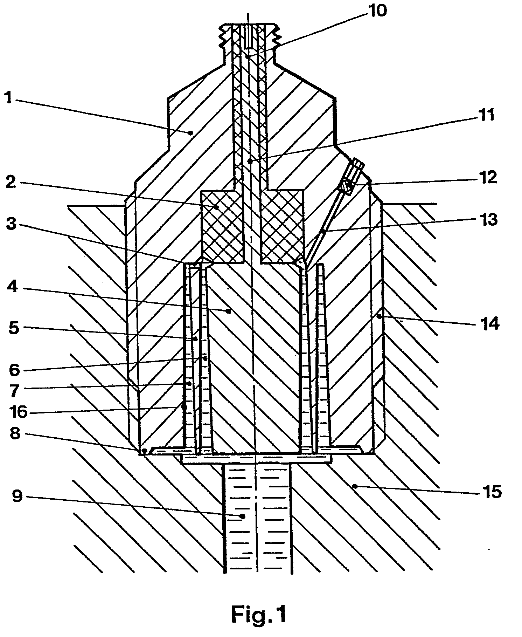

Der Hochdruckaufnehmer Fig. 1 besitzt einen Druckaufnehmerkörper 1 mit einem Gewinde 14, das erlaubt, den ganzen
Aufnehmer in den Adapter 15 einzuschrauben. Der Adapter 15
kann ein T-Stück sein, das in die Brennstoffleitung eingelötet worden ist. Oft ist es möglich, den Aufnehmer direkt
in das Brennstoffpumpengehäuse oder Einspritzdüsengehäuse
einzuschrauben und auf die Adapter zu verzichten.

Im Druckaufnehmerkörper 1 befindet sich in einem vorne offenen
Hohlraum eine erste oder Messelektrode 4, die vom Isolator 2 gehalten
ist und über den Zuleitungsstab 11 mit dem Stecker 10
elektrisch verbunden ist. Die Messelektrode 4 bildet mit der zweiten oder Gegenelektrode 5 den elektrischen Kondensator.
Zwischen der Messelektrode 4 und der Gegenelektrode 5,
die mit dem Druckaufnehmerkörper 1 verbunden ist, befindet
sich der Zwischenraum 6 für den als Dielektrikum wirkenden
Dieselbrennstoff, der durch die Zuführungsbohrung 9 eintreten kann. Der Brennstoff kann auch in den Zwischenraum
7 zwischen Gegenelektrode 5 und Gehäusewand 16 von Druckaufnehmerkörper 1 eintreten. An und für sich ist die
Gegenelektrode 5     nicht nötig, da auch die Gehäusewand 16 die Funktion einer Gegenelektrode übernehmen kann.
In unmittelbarer Nähe der Gehäusewand 16 befindet sich das
Gewinde 14, mit dessen Hilfe der Aufnehmer durch Einschrauben auf die Dichtungspartie 8 gepresst wird, wodurch die
Gehäusewand 16 unter Spannungen versetzt wird und sich
deformieren kann. Diese Deformationen können die Spaltbreite zur Messelektrode verändern, was eine Veränderung
der Kapazität zur Folge hat. Der Druckaufnehmer würde
dadurch einschraub-empfindlich. Da die Einschraubvorspannung
auch vom Druck abhängig ist, kann daraus eine indirekte
Druckabhängigkeit durch Veränderung des Elektrodenabstandes
entstehen, die erfahrungsgemäss unlinear ist und Genauigkeit des Aufnehmers als Messinstrument stark beeinträchtigen
könnte. Durch die Ausbildung einer von der Einschraubung unabhängigen Gegenelektrode 5, die sich sehr wenig verzieht, da sie nur einem hydrostatischen Druck ausgesetzt ist, werden alle Einschraubfehler vermieden.

Bei der Montage des Aufnehmers muss darauf geachtet werden, dass sich in den Zwischenräumen 6 und 7 keine Luftblasen befinden. Um eventuell vorhandene Luftblasen zu entfernen, sind ein den Grundkörper 1 durchsetzender Entlüftungskanal 13 und ein Ventil 12 vorgesehen, die erlauben, die Luftblasen aus dem Raum 6 nach aussen abzuführen. Damit ebenfalls der Zwischenraum 7 entlüftet werden kann, ist in der Gegenelektrode 5 eine Verbindungsbohrung 3 vorgesehen, über welche die Luft aus dem Raum 7 in den Raum 6 und von da über Entlüftungskanal 13 und Ventil 12 nach aussen geleitet werden kann. Obschon eine Luftblase im Zwischenraum 6 die Kapazität des Aufnehmers nicht direkt beeinflusst, muss trotzdem darauf geachtet werden, dass alle Luft entfernt wird, da durch die Kompression der Luft eine starke adiabatische Erwärmung stattfinden kann, die das Dielektrikum im Zwischenraum 6 durch Wärmefluss erwärmen kann, was zu einer fehlerhaften Kapazitätsänderung führen kann.

Da Einspritzvorgänge in Dieselmotoren sehr schnell ablaufen, muss darauf geachtet werden, dass das Druckmedium das zum Druckaufbau in Zwischenraum 6 und 7 zufliessen muss, ungehindert passieren kann. Dies kann erreicht werden, indem man die Gehäusewand 16 und/oder die Gegenelektrode 5 und/oder die Messelektrode 4 leicht konisch gestaltet, so dass sich die Räume 6, 7 gegen die Zuführungsbohrung 9 hin verbreitern.

0160713

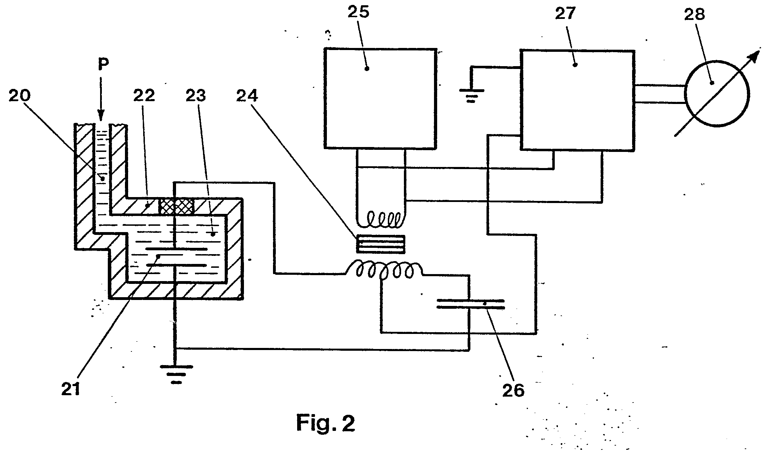

Fig. 2 zeigt ein Beispiel für eine einfache Kapazitätsmessung in Verbindung mit einem Hochdruckaufnehmer, wie
in Fig. 1 gezeigt. Es sei hier darauf hingewiesen, dass
es eine grosse Anzahl von verschiedenen Möglichkeiten zur
Messung einer Kapazität gibt, die alle hier eingesetzt
werden könnten. Es wird hier eine längst bekannte Möglichkeit, die sehr empfindlich ist, stellvertretend für alle
andern beschrieben.

Der Kondensator 21 ist in dem durch die Druckzuleitung 20 mit dem
Druckmedium beaufschlagten Innenraum 23 des Gehäuses 22 angeordnet und an
die Sekundarwicklung eines Transformators 24 angeschlossen.
Die isolierte Messelektrode des Kondensators 21 ist direkt
an Transformator 24 und an die geerdete Gegenelektrode
über die Referenzkapazität 26, die etwa gleich gross wie
die Kapazität des Kondensators 21 sein soll, angeschlossen. Die Primärwicklung von Transformator wird
von einem Oszillator 25 mit Wechselstrom von ca. 20 kHz
gespeist. Die Sekundarwicklung besitzt eine Mittelabzapfung, die mit dem Eingang eines pahsenempfindlichen
Gleichrichters 27 in Verbindung steht. Letzerer erhält
ebenfalls eine Phasen-Referenzspannung vom Oszillator 25.
Die gleichgerichtete Wechselspannung, die je nach Phasenbeziehung positiv oder negativ sein kann, wird von Messinstrument 28 angezeigt.

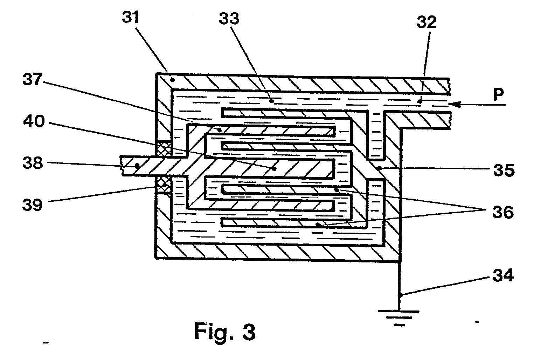

Eine Abwandlung des Aufnehmers, Fig. 1, zeigt Fig. 3. Der
Unterschied gegenüber Fig. 1 besteht nur darin, dass die
Messelektrode 37 und die Gegenelektrode 36 jeweils aus ein oder mehreren hülsenförmigen Teilen bestehen, die ineinander geschachtelt
sind. Wie dargestellt, umfasst die Messelektrode ausserdem ein vollzylindrisches Mittelteil 40. Die Gegenelektrode 36 ist über die Verbindung 35
mit dem Gehäuse 31 und Erde 34 verbunden. Die Messelektrode 37 wird vom Verbindungsteil 38 gehalten, das seinerseits mittels Isolators 39 im Gehäuse 31 festgehalten ist. 32 ist die Druckmediumzuführung zum Innnenraum 33 des Gehäuses. Die Vielzahl der Elektroden ergibt eine grössere Kapazität des Aufnehmers und ermöglicht eine empfindlichere und genauere Druckmessung in einem niedrigen Druckbereich. Fig. 3 ist rotations-symmetrisch gedacht. Sinngemäss kann man auch einen ebenen Aufbau realisieren. Das Druckgehäuse wird dann rechteckig schachtelförmig und die Elektroden werden eben und rechteckig, wie sie in den Luftkondensatoren früher in der Radiotechnik zur Anwendung kamen. Solche Luftkondensatoren sind heute noch als Kapazitätsnomale im Handel erhältlich.

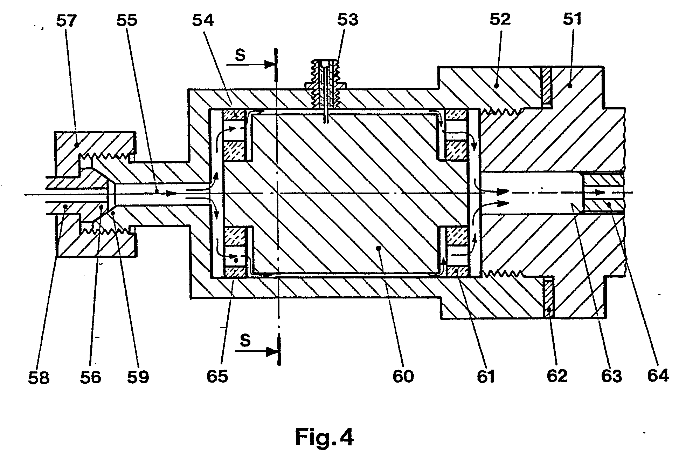

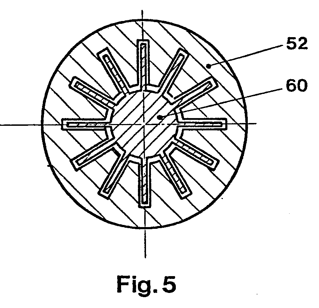

Eine andere Abwandlung des Aufnehmers, Fig. 1, zeigen die Figuren 4 und 5. Der wesentliche Unterschied dieser Ausführung gegenüber derjenigen von Figur 1 besteht darin, dass der ganze Aufnehmer vom Druckmedium durchströmt wird. Es ergibt sich daraus der Vorteil, dass eventuell vorhandene Luftblasen weggetragen werden, so dass man auf den Entlüftungskanal 13 und das Ventil 12 verzichten kann. Dadurch wird auch eine Wartungsarbeit, die leicht vergessen werden kann, vermieden.

Im Aufnehmergehäuse 52 befindet sich die Messelektrode 60, die mit Anschlusstecker 53 elektrische Verbindung hat und die durch zwei Isolatoren 54 und 61 im Aufnehmergehäuse 52 gehalten ist. Der Aufnehmer kann mittels des Konus 56, dem konischen Sitz 59 und der Überwurfmutter 57 mit der Druckmediumzuflussleitung 58 und über den Nippel 51 und der Dichtung 62 mittels Verlötung 63 mit der Druckmediumabflussleitung 64 verbunden werden. Anstatt durch eine Verlötung 63 gemäss der rechten Seite von Fig. 4 kann die Verbindung zwischen Aufnehmer und Druckmediumleitung analog zur linken Seite durch einen Konus 56, einen konischen Sitz 59 und eine Überwurfmutter 57 erfolgen.

Die Pfeile 55 zeigen den Durchflussweg des Druckmediums durch den Aufnehmer. Damit der Weg frei ist, sind Durchflussöffnungen 65 im Isolator 54 notwendig. Um grosse Kapazität zu erhalten, kann die Messelektrode 60 und der Hohlraum im Aufnehmergehäuse 52 sternförmig gestaltet werden, wie der Schnitt S-S in Fig. 5 zeigt.

Einfachheitshalber kann man auch auf die Sternform verzichten und den Hohlraum im Aufnehmergehäuse 52 und die Messelektrode 60 zylindrisch oder prismatisch gestalten.Auf eine separat befestigte Gegenelektrode 5 kann man bei dieser Ausführungsform verzichten und dem Aufnehmergehäuse 52 die Funktion der Gegenelektrode übertragen, da die Verschraubungen genügend weit von der Messelektrode 60 entfernt sind und ein Aufblähen des Gehäuses nur radiale Verschiebungen der Elektroden zur Folge hat, was die Kapazität des Aufnehmers nur wenig ändert.

Durch Vermeidung von druckbeaufschlagten Membranen und Anwendung der kapazitiven, piezodielektrischen Messmethode ist es möglich, einen neuen ermüdungssicheren Druckaufnehmer herzustellen, der sich besonders zur Ueberwachung von Kraftstoff, insbesondere Dieselkraftstoff-Einspritzsystemen eignet. Es versteht sich, dass der erfindungsgemässe Druckaufnehmer nicht auf diese Anwendung beschränkt ist, sondern allgemein zur Überwachung von Systemen verwendet werden kann, die ein Druckmedium mit elektrisch isolierender bzw. dielektrischer Eigenschaft enthalten.

## Patentansprüche

1.    Druckaufnehmer, dadurch g e k e n n z e i c h n e t , dass er als mit dem zu überwachenden Druckmedium als Dielektrikum beaufschlagbarer Kondensator ausgebildet ist.

2.    Druckaufnehmer nach Anspruch 1, dadurch g e k e n n z e i c h n e t , dass das zu überwachende Druckmedium der Kraftstoff, insbesondere Dieselkraftstoff, von Kraftstoffeinspritzsystemen ist.

3.    Druckaufnehmer nach Anspruch 1 oder 2, dadurch g e k e n n z e i c h n e t , dass er wenigstens eine erste Elektrode (4, 37, 60) und wenigstens eine dazu beabstandete zweite Elektrode (5, 16, 36, 52) umfasst, wobei in den Raum (6, 7, 33) zwischen den Elektroden das Druckmedium einführbar ist.

4.    Druckaufnehmer nach Anspruch 3, dadurch g e k e n n z e i c h n e t , dass die erste innere Elektrode (4, 40, 60) im wesentlichen zylindrisch ausgebildet ist.

5.    Druckaufnehmer nach Anspruch 3 und 4, dadurch g e k e n n z e i c h n e t , dass die zweite äussere Elektrode (5, 16, 36, 52) im wesentlichen hülsenförmig ausgebildet ist.

6.    Druckaufnehmer nach einem der Ansprüche 3 bis 5, dadurch g e k e n n z e i c h n e t , dass wenigstens entweder die erste oder zweite Elektrode (4, 5) leicht konisch ausgebildet ist, so dass sich der Raum (6, 7) zwischen den Elektroden zur Zufuhröffnung, über die das Druckmedium in den Aufnehmer einführbar ist, verbreitert.

7.    Druckaufnehmer nach einem der vorhergehenden Ansprüche, dadurch g e k e n n z e i c h n e t , dass der das Druckmedium aufnehmende Raum (6, 7) mit Einrichtungen (12, 13) zum Entlüften  verbunden ist.

8.    Druckaufnehmer nach Anspruch 3, dadurch g e - k e n n z e i c h n e t , dass die erste Elektrode (37) einen zentralen zylindrischen Teil (40) und wenigstens ein konzentrisch dazu beabstandetes hülsenförmiges Teil umfasst und dass die Teile der ersten Elektrode (37) von entsprechenden konzentrischen beabstandeten hülsenförmigen Teilen der zweiten Elektrode (36) umgeben sind.

9.    Druckaufnehmer nach einem der Ansprüche 1 bis 3, dadurch g e k e n n z e i c h n e t , dass ein Zu- und Abfluss für das Druckmedium vorgesehen ist und der Durchflussweg für das Druckmedium durch den Aufnehmer so gestaltet ist, dass im Druckmedium befindliche Gas- oder Luftblasen nicht im Aufnehmer zurückgehalten werden.

10.    Druckaufnehmer nach Anspruch 9, g e k e n n - z e i c h n e t   durch ein langgestrecktes Gehäuse (52) mit Verbindungseinrichtungen zum Zuführen und Abführen des Druckmediums.

11.    Druckaufnehmer nach Anspruch 9 oder 10, dadurch g e - k e n n z e i c h n e t , dass die erste innere Elektrode (60) und der das Druckmedium aufnehmende Raum im Gehäuse (52) prismatisch ausgebildet sind.

12.    Druckaufnehmer nach Anspruch 9 oder 10, d a - durch g e k e n n z e i c h n e t , dass der das Druckmedium aufnehmende Raum und die erste innere Elektrode (60) eine im wesentlichen sternförmige Querschnittsausbildung haben.

13. Druckaufnehmer nach einem der vorhergehenden Ansprüche, dadurch g e k e n n z e i c h n e t , dass dieser so ausgebildet ist, dass die Breite des Raumes zwischen der ersten und zweiten Elektrode unabhängig von durch äussere Beanspruchungen induzierten Gehäusedeformationen ist.

Fig.1

0160713

Fig. 2

**Fig. 3**

Fig. 4

Fig. 5

))) Europäisches
Patentamt

**EUROPÄISCHER RECHERCHENBERICHT**

**0160713**

Nummer der Anmeldung

EP 84 10 4980

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 931 361 (RC-95 INC.) <br> * Ansprüche 1,2; Seite 8, Absatz 2; Figuren 1,2 * | 1,3 | G 01 L 9/12 <br> G 01 L 23/12 <br> F 02 M 65/00 |
| X | FR-A-1 261 397 (LABORATOIRE DES BASSES PRESSIONS) <br> * Insgesamt * | 1,3 | |
| X | SOVIET INVENTION ILLUSTRATED DERWENT, Woche B15, Offenlegung 23. Mai 1979, London, GB; & SU - A - 608 068 (SHMIN, YU.I.) 26.04.1978) <br> * Insgesamt * | 1,3-5 | |
| | | | **RECHERCHIERTE SACHGEBIETE (Int. Cl.4)** |
| | | | G 01 L 9 <br> G 01 L 23 |

Der vorliegende Recherchenbericht wurde für alle Patentansprüche erstellt.

| Recherchenort | Abschlußdatum der Recherche | Prüfer |
|---|---|---|
| DEN HAAG | 04-01-1985 | VAN ASSCHE P.O. |